# EUROPÄISCHE PATENTSCHRIFT

(11) **EP 1 678 887 B1**
(45) Veröffentlichungstag und Bekanntmachung des Hinweises auf die Patenterteilung: **13.06.2007**
(21) Anmeldenummer: 04766751.4
(22) Anmeldetag: 09.09.2004
(51) Int. Cl.: H04L 12/56

(54) **VERFAHREN, FUNKSTATION UND COMPUTERPROGRAMMPRODUKT ZUM ZUGRIFF AUF FUNKRESSOURCEN IN EINEM ADHOC-FUNKKOMMUNIKATIONSSYSTEM**
METHOD, RADIO STATION AND COMPUTER PROGRAMME FOR ACCESSING RADIO RESOURCES IN AN AD-HOC RADIO COMMUNICATIONS SYSTEM
PROCEDE, STATION RADIO ET PRODUIT PROGRAMME INFORMATIQUE POUR L'ACCES A DES RESSOURCES RADIO DANS UN SYSTEME DE COMMUNICATION RADIO AD HOC

(30) Priorität: 31.10.2003 DE 10350907
(43) Veröffentlichungstag der Anmeldung: 12.07.2006
(73) Patentinhaber: SIEMENS AKTIENGESELLSCHAFT, 80333 München (DE)
(72) Erfinder: LI, Hui, Chaoyang District, 100102 Beijing (CN)
(86) Internationale Anmeldenummer: PCT/EP2004/052106
(87) Internationale Veröffentlichungsnummer: WO 2005/043832

(56) Entgegenhaltungen:
- US-A1- 2003 050 012
- "IEEE standard Part 11: wireless LAN medium access control (MAC) and physical layer (PHY) specification. (ISO/IEC 8802-11, ANSI/IEEE Std 802.11-1999) Chapter 9: MAC sublayer functional description" ISO/IEC 8802-11 ANSI/IEEE STD 802.11, XX, XX, 20. August 1999 (1999-08-20), Seiten 70-97, XP002207974
- WALKE B ET AL: "Protocols for a wireless-ATM multihop network" BROADBAND COMMUNICATIONS, 1998. ACCESSING, TRANSMISSION, NETWORKING. PROCEEDINGS. 1998 INTERNATIONAL ZURICH SEMINAR ON ZURICH, SWITZERLAND 17-19 FEB. 1998, NEW YORK, NY, USA,IEEE, US, 17. Februar 1998 (1998-02-17), Seiten 75-82, XP010277017 ISBN: 0-7803-3893-6

## Beschreibung

Die Erfindung betrifft ein Verfahren zur Signalisierung betreffend eine beabsichtigte Datenübertragung von einer ersten Funkstation zu einer zweiten Funkstation in einem Adhoc-Modus eines Funkkommunikationssystem.

Weiterhin betrifft die Erfindung eine Funkstation zur Kommunikation mit einer anderen Funkstation in einem Adhoc-Modus eines Funkkommunikationssystems und ein Computerprogrammprodukt für eine Funkstation in einem Adhoc-Modus eines Funkkommunikationssystems.

In Funkkommunikationssystemen werden Informationen (beispielsweise Signalisierung oder Nutzdaten wie Sprache, Bilder, Kurznachrichten oder andere Daten) mittels elektromagnetischer Wellen über eine Funkschnittstelle zwischen sendender und empfangender Funkstation übertragen.

Funkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Für das zellulare GSM-Mobilfunksystem werden Frequenzen bei 900, 1800 und 1900 MHz genutzt. Die zellularen Systeme übermitteln aktuell im wesentlichen Sprache, Telefax und Kurzmitteilungen SMS (Short Message Service).

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM. Als lokale funkgestützte Netze scheinen sich jedoch derzeit vor allem in den USA und Europa fast ausschließlich Produkte auf Basis der IEEE 802.11-Familie durchzusetzen.

Allgemein wird für WLANs der nicht lizenzierte Frequenzbereich um 2,4 GHz genutzt, wobei die Datenübertragungsraten bei bis zu 11 Mbit/s liegen. Künftige WLANs können im 5 GHz Bereich betrieben werden und Datenraten von über 50 Mbit/s erreichen. Somit stehen den Teilnehmern der WLANs Datenraten zur Verfügung, die erheblich höher liegen, als diejenigen, die von der dritten Mobilfunkgeneration angeboten werden. Damit ist für die Übertragung von großen Datenmengen, insbesondere in Verbindung mit Internetzugriffen der Zugriff auf WLANs für hochbitratige Verbindungen vorteilhaft.

Während die Kommunikation zwischen teilnehmerseitigen Funkstationen eines zellularen Mobilfunkkommunikationssystems in der Regel über Basisstationen erfolgt, können in einem Adhoc-Modus eines Funkkommunikationssystems teilnehmerseitige Funkstationen ohne eine vermittelnde zentrale Einrichtung eine Funkverbindung untereinander aufbauen. Die Verbindung zwischen diesen Funkstationen erfolgt dabei entweder direkt oder bei größeren Entfernungen über weitere Funkstationen, die für diese Verbindung Relaisstationen bilden. Die Funkstationen eines selbstorganisierenden Netzes können mobile Funkstationen (beispielsweise Mobilfunkgeräte von Personen oder in Verkehrsfahrzeugen) und/oder vorwiegend stationäre Funkstationen (beispielsweise Computer, Drucker, Haushaltsgeräte) sein. Um Bestandteil eines Adhoc-Netzes zu sein, muss sich eine Funkstation in dem Funkabdeckungsbereich von zumindest einer benachbarten Funkstation befinden. Beispiele für selbstorganisierende Netze sind die WLANs.

Der Zugriff von Funkstationen auf die gemeinsamen Funkressourcen des Übertragungsmedium, wie zum Beispiel Zeit, Frequenz, Leistung oder Raum, wird bei Funkkommunikationssystemen durch Vielfachzugriffsverfahren (Multiple Access, MA) geregelt. Bei orthogonalen Frequenz-Vielfachzugriffsverfahren (OFDM) wird ein Frequenzband in äquidistante, orthogonale Subbänder bzw. Unterträger aufgeteilt. Den teilnehmerseitigen Funkstationen werden dann in der Regel alle oder ein Teil der Subbänder zur Kommunikation zugewiesen.

Der Erfindung liegt die Aufgabe zugrunde, ein Verfahren der eingangs genannten Art aufzuzeigen, welches einen effizienten Ablauf der Signalisierung zwischen einer Sende- und einer Empfangsfunkstation im Vorfeld der Übertragung von Daten in einem Adhoc-Modus eines Funkkommunikationssystems ermöglicht. Ferner soll eine teilnehmerseitige Funkstationen und ein für eine Funkstation in einem Adhoc-Modus geeignetes Computerprogrammprodukt zur Durchführung des Verfahrens aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem Verfahren wird eine beabsichtigte Datenübertragung von einer ersten Funkstation zu einer zweiten Funkstation in einem Adhoc-Modus eines Funkkommunikationssystems signalisiert. Erfindungsgemäß erfolgt die Kommunikation von Funkstationen in dem Adhoc-Modus unter Verwendungen eines in eine Mehrzahl von Subbändern aufgeteilten Frequenzbandes, wobei der ersten Funkstation eines oder mehrere erste Subbänder und der zweiten Funkstation eines oder mehrere zweite Subbänder zur Kommunikation zugewiesen sind. Weiterhin sendet die erste Funkstation an die zweite Funkstation eine Ankündigung der beabsichtigten Datenübertragung auf einem oder mehreren Subbändern entsprechend einer ersten Anzahl von Subbändern. Hierbei besteht das Subband oder die Subbänder der ersten Anzahl von Subbändern aus einem oder mehreren der ersten Subbänder und/oder aus einem oder mehreren der zweiten Subbänder.

In einem Adhoc-Modus eines Funkkommunikationssystems kommunizieren teilnehmerseitige Funkstationen, wie z.B. mobile Computer oder Mobiltelefone, ohne notwendige Zwischenschaltung einer netzseitigen Einrichtung. Zur Kommunikation sind den Funkstationen gemäß der Erfindung Subbänder eines Frequenzbandes zugewiesen, wobei diese Zuweisung z.B. durch eine Basisstation oder einen Funkzugangspunkt eines WLAN erfolgen kann. Das Verfahren ist insbesondere in dem Fall anwendbar, wenn das oder die der ersten Funkstation zugewiesenen ersten Subbänder und das oder die der zweiten Funkstation zugewiesenen zweiten Subbänder sind voneinander unterscheiden. Durch die Ankündigung der beabsichtigten Datenübertragung durch die erste Funkstation wird die zweite Funkstation darüber informiert, dass die erste Funkstation plant, Daten an sie zu versenden. Die Ankündigung kann hierbei Informationen über die Art und den Umfang der zu versendenden Daten umfassen, sowie über die Dauer der Versendung der Daten, den Sender und den Adressaten der Daten und über Subbänder, auf welchen die erste Funkstation plant, die Daten zu übertragen. Die Ankündigung kann bewirken, dass diejenigen Funkstationen innerhalb des Funkabdeckungsbereiches der ersten Funkstation, welche die Ankündigung empfangen, die für die Ankündigung verwendeten Subbänder der ersten Anzahl von Subbändern als reserviert für eine Datenübertragung der ersten Funkstation betrachten und somit in der für die Datenübertragung relevanten Zeitspanne keinen Zugriff auf diese Subbänder vornehmen.

In Weiterbildung der Erfindung detektiert die erste Funkstation vor der Versendung der Ankündigung eine aktuelle Belegung von ersten und/oder von zweiten Subbändern und das Subband oder die Subbänder der ersten Anzahl von Subbändern besteht aus einem oder mehreren aktuell als nicht belegt detektierten Subbändern. Aufgrund der Detektion kann die erste Funkstation erfassen, ob erste und/oder zweite Subbänder in dem Bereich ihrer Funkabdeckung von anderen Funkstationen aktuell zur Kommunikation reserviert sind oder hierfür benutzt werden. Die Detektion kann hierbei die Gesamtheit der ersten und zweiten Subbänder betreffen, sowie eine Teilmenge hiervon. Die Ankündigung ausschließlich auf Subbändern zu versenden, welche als aktuell nicht belegt detektiert wurden, weist den Vorteil auf, dass somit durch die erste Funkstation keine Interferenzsignale zu von anderen Funkstationen versendeten Signalen innerhalb der Funkreichweite der ersten Funkstation erzeugt werden.

In dem Fall, dass die Daten an die zweite Funkstation als einzigem Adressat gesendet werden sollen, kann das Subband oder die Subbänder der ersten Anzahl von Subbändern bei einer Detektion von mindestens einem ersten Subband als aktuell nicht belegt aus einer Menge des oder der nicht belegten ersten Subbänder bestehen. Dies bedeutet, dass die erste Funkstation dann, wenn mindestens eines der ihr zugewiesenen Subbänder aktuell verfügbar ist, ausschließlich ein ihr zugewiesenes oder mehrere ihr zugewiesene freie Subbänder zur Versendung der Ankündigung verwendet. Dies begünstigt eine realistische Abschätzung der Ausnutzung der Subbänder durch diejenigen Funkstationen, welchen die Subbänder zugewiesen wurden.

In dem Fall, dass die Daten an die zweite Funkstation als einzigem Adressat gesendet werden sollen, kann das Subband oder die Subbänder der ersten Anzahl von Subbändern bei einer Detektion von den ersten Subbändern als aktuell belegt und einer Detektion von mindestens einem zweiten Subband als aktuell nicht belegt aus einer Menge des oder der nicht belegten zweiten Subbänder bestehen. Hierbei wird somit in dem Fall, dass aller der der ersten Funkstation zugewiesenen Subbänder nicht frei sind, auf eines oder mehrere Subbänder der zweiten Funkstation ausgewichen, welche aktuell nicht belegt sind.

Wenn die Daten außer an die zweite Funkstation an eine dritte Funkstation, welcher eines oder mehrere dritte Subbänder zur Kommunikation zugewiesen sind, als Adressat gesendet werden sollen, kann das Subband oder die Subbänder der ersten Anzahl von Subbändern bei einer Detektion von mindestens einem ersten und mindestens einem zweiten Subband als aktuell nicht belegt aus einer Menge des oder der nicht belegten ersten und einer Menge des oder der nicht belegten zweiten Subbänder bestehen. Im beschriebenen Fall sollen die Daten nicht nur von der zweiten Funkstation, sondern auch von einer oder auch von mehreren dritten Funkstationen erfolgreich empfangen werden. Der dritten Funkstation sind dritte Subbänder zur Kommunikation zugewiesen, wobei sich die dritten Subbänder in der Regel von den ersten und den zweiten Subbändern unterscheiden. Stellt die erste Funkstation fest, dass zumindest eine Teilmenge der ersten Subbänder und zumindest eine Teilmenge der zweiten Subbänder aktuell zur Kommunikation zur Verfügung stehen, so sendet sie die Ankündigung sowohl auf mindestens einem der ersten, als auch auf mindestens einem der zweiten Subbänder.

Wenn dagegen die Daten außer an die zweite Funkstation an eine dritte Funkstation als Adressat gesendet werden sollen und die ersten Subbänder als belegt detektiert wurden und mindestens ein zweites Subband als aktuell nicht belegt detektiert wird, so kann das Subband oder die Subbänder der ersten Anzahl von Subbändern aus einer Menge des oder der nicht belegten zweiten Subbänder bestehen.

Die oben genannte Aufgabe hinsichtlich des Verfahrens wird weiterhin durch ein Verfahren mit dem Merkmalen des Anspruchs 7 gelöst.

Vorteilhafte Ausgestaltungen und Weiterbildungen sind Gegenstand von Unteransprüchen.

Erfindungsgemäß empfängt die zweite Funkstation von der ersten Funkstation auf einem oder mehreren Subbändern entsprechend einer ersten Anzahl von Subbändern eine Ankündigung der beabsichtigten Datenübertragung von der ersten Funkstation an die zweite Funkstation. Nach dem Empfang der Ankündigung sendet die zweite Funkstation an die erste Funkstation auf einem oder mehreren Subbändern entsprechend einer zweiten Anzahl von Subbändern eine Bestätigung der beabsichtigten Datenübertragung. Hierbei besteht das Subband oder die Subbänder der zweiten Anzahl von Subbändern aus einem oder mehreren der ersten Subbänder und/oder einem oder mehreren der zweiten Subbänder.

Die Bestätigung der beabsichtigen Datenübertragung durch die zweite Funkstation zeigt der ersten Funkstation an, dass die zweite Funkstation zum Empfang der Daten bereit ist. Auf andere Funkstationen hat die Bestätigung der zweiten Funkstation die Wirkung, dass die Subbänder der zweiten Anzahl von Subbändern als reserviert gelten. Somit übertragen die anderen Funkstationen innerhalb der Funkreichweite der zweiten Funkstation keine Daten auf dem Subband oder den Subbändern der zweiten Anzahl von Subbändern. Dies gilt für einen Zeitraum, welchen die anderen Funkstationen dem Inhalt der Bestätigung entnehmen können.

In Weiterbildung der Erfindung detektiert die zweite Funkstation vor der Versendung der Bestätigung eine aktuelle Belegung von ersten und/oder von zweiten Subbändern und das Subband oder die Subbänder der zweiten Anzahl von Subbändern besteht aus einem oder mehreren aktuell als nicht belegt detektierten Subbändern. Die Detektion durch die zweite Funkstation kann sich sowohl auf eine Teilmenge oder alle Subbänder der ersten Subbänder und/oder der zweiten Subbänder beziehen.

Auch kann sich die Detektion durch die zweite Funkstation auf das Subband oder die Subbänder der ersten Anzahl von Subbändern beschränken. Die Bestätigung wird im Anschluss an die Detektion nur auf Subbändern gesendet, welche aktuell im Funkabdeckungsbereich der zweiten Funkstation nicht verwendet werden oder reserviert sind. Eine Reservierung könnte z.B. durch das Versendung einer Ankündigung und/oder Bestätigung durch andere Funkstationen auf den jeweiligen Subbändern geschehen sein.

Bei einer Detektion durch die zweite Funkstation des Subbandes oder der Subbänder der ersten Anzahl von Subbändern als unbelegt kann das Subband oder die Subbänder der zweiten Anzahl von Subbändern dem Subband oder den Subbändern der ersten Anzahl von Subbändern entsprechen. In diesem Fall sendet die zweite Funkstation die Bestätigung auf allen Subbändern, welche die erste Funkstation zur Versendung der Ankündigung verwendet hat. Dies entspricht der Reservierung einer maximal möglichen Anzahl von Subbändern durch die zweite Funkstation in Bezug auf die von der ersten Funkstation durch die Ankündigung reservierten Subbänder.

Mit Vorteil entspricht das Subband oder die Subbänder der zweiten Anzahl von Subbändern einer Teilmenge der Subbänder der ersten Anzahl von Subbändern bei einer Detektion durch die zweite Funkstation des Subbandes oder der Subbänder der Teilmenge als unbelegt und dem oder den restlichen Subbändern der ersten Anzahl von Subbändern als belegt. Stellt die zweite Funkstation also fest, dass ein Teil der für die Ankündigung verwendeten Subbänder frei ist, ein anderer Teil jedoch aktuell belegt ist, so findet die Versendung der Bestätigung auf den als frei erkannten Subbändern statt.

In Weiterbildung der Erfindung sendet die erste Funkstation an die zweite Funkstation auf einem oder mehreren Subbändern entsprechend einer dritten Anzahl von Subbändern die Daten nach dem Empfang der Bestätigung, wobei das Subband oder die Subbänder der dritten Anzahl von Subbändern aus einem oder mehreren der ersten Subbänder und/oder aus einem oder mehreren der zweiten Subbänder besteht. Unterbleibt die Versendung einer Bestätigung durch die zweite Funkstation, so z.B. dann, wenn die zweite Funkstation alle ersten und alle zweiten Subbänder als belegt detektiert, so unterbleibt vorteilhafterweise auch die Versendung der Daten durch die erste Funkstation.

In Ausgestaltung der Erfindung entspricht das Subband oder die Subbänder der dritten Anzahl von Subbändern
- dem Subband oder den Subbändern der ersten Anzahl von Subbändern oder
- einer Teilmenge der Subbänder der ersten Anzahl von Subbändern oder
- dem Subband oder den Subbändern der zweiten Anzahl von Subbändern oder
- einer Teilmenge der Subbänder der zweiten Anzahl von Subbändern.

Die Wahl, welche Subbänder zur Versendung der Daten verwendet werden, hängt somit von der Wahl der für die Ankündigung und/oder für die Bestätigung verwendeten Subbänder ab.

Die oben genannte Aufgabe bezüglich einer Funkstation zur Kommunikation mit einer anderen Funkstation in einem Adhoc-Modus eines Funkkommunikationssystem wird durch eine Funkstation mit den Merkmalen des Anspruchs 13 gelöst.

Eine vorteilhafte Ausgestaltung ist Gegenstand eines Unteranspruchs.

Die erfindungsgemäße Funkstation weist Mittel zum Speichern von Informationen über eines oder mehrere erste der Funkstation der Kommunikation zugewiesene Subbänder eines in eine Mehrzahl von Subbändern aufgeteilten Frequenzbandes auf, und Mittel zum Speichern von Informationen über eines oder mehrere zweite der anderen Funkstation zur Kommunikation zugewiesene Subbänder des Frequenzbandes. Die gespeicherten Informationen sind hierbei derart ausgestaltet, dass die Funkstation unter Verwendung der Informationen eine Kommunikation mit der anderen Funkstation sowohl auf den ersten als auch auf den zweiten Subbändern durchführen kann. Weiterhin umfasst die Funkstation Mittel zum Versenden einer Ankündigung an die andere Funkstation einer beabsichtigten Datenübertragung an die andere Funkstation auf einem oder mehreren Subbändern entsprechend einer ersten Anzahl von Subbändern. Hierbei besteht das Subband oder die Subbänder der ersten Anzahl von Subbändern aus einem oder mehreren der ersten Subbänder und/oder aus einem oder mehreren der zweiten Subbänder.

In Ausgestaltung der Erfindung umfasst die Funkstation weiterhin Mittel zum Detektieren einer aktuellen Belegung von ersten und/oder von zweiten Subbändern vor der Versendung der Ankündigung, sowie Mittel zum Auswählen des Subbandes oder der Subbänder der ersten Anzahl von Subbändern in Abhängigkeit von einem Detektionsergebnis der Belegung von ersten und/oder zweiten Subbändern.

Die erfindungsgemäße Funkstation eignet sich insbesondere zum Durchführen des erfindungsgemäßen Verfahrens. Hierzu kann sie geeignete weitere Mittel aufweisen.

Die oben genannte Aufgabe hinsichtlich einer Funkstation zur Kommunikation mit einer anderen Funkstation in einem Adhoc-Modus eines Funkkommunikationssystems wird weiterhin durch eine Funkstation mit den Merkmalen des Anspruchs 15 gelöst.

Eine vorteilhafte Ausgestaltung ist Gegenstand eines Unteranspruchs.

Die erfindungsgemäße Funkstation weist Mittel zum Speichern von Informationen über eines oder mehrere erste der Funkstation zur Kommunikation zugewiesene Subbänder eines in eine Mehrzahl von Subbändern aufgeteilten Frequenzbandes auf, und Mittel zum Speichern von Informationen über eines oder mehrere zweite der anderen Funkstation zur Kommunikation zugewiesene Subbänder des Frequenzbandes. Weiterhin umfasst sie Mittel zum Empfangen und Auswerten einer Ankündigung von der anderen Funkstation einer beabsichtigten Datenübertragung von der anderen Funkstation an die Funkstation auf einem oder mehreren Subbändern entsprechend einer ersten Anzahl von Subbändern. Schließlich weist die erfindungsgemäße Funkstation Mittel zum Versenden einer Bestätigung an die andere Funkstation der beabsichtigten Datenübertragung auf einem oder mehreren Subbändern entsprechend einer zweiten Anzahl von Subbändern nach dem Empfang der Ankündigung auf, wobei das Subband oder die Subbänder der zweiten Anzahl von Subbändern aus einem oder mehreren der ersten Subbänder und/oder aus einem oder mehreren der zweiten Subbänder besteht.

In Ausgestaltung der Erfindung umfasst die Funkstation weiterhin Mittel zum Detektieren einer aktuellen Belegung von ersten und/oder von zweiten Subbändern vor der Versendung der Ankündigung, sowie Mittel zum Auswählen des Subbandes oder der Subbänder der zweiten Anzahl von Subbändern in Abhängigkeit von einem Detektionsergebnis der Belegung von ersten und/oder zweiten Subbändern und in Abhängigkeit von dem Subband oder den Subbändern der ersten Anzahl von Subbändern. Die Funkstation kann somit die Auswahl der zur Versendung der Bestätigung verwendeten Subbänder davon abhängig machen, welche Subbänder die andere Funkstation zur Versendung der Ankündigung verwendet hat.

Die erfindungsgemäße Funkstation eignet sich insbesondere zum Durchführen des erfindungsgemäßen Verfahrens und kann hierzu weitere geeignete Mittel aufweisen. Insbesondere kann eine Funkstation sowohl die Mittel der zuerst beschriebenen erfindungsgemäßen Funkstation nach den Ansprüchen 13 und 14, als auch die Mittel der als zweites beschriebenen erfindungsgemä-ßen Funkstation nach den Ansprüchen 15 und 16 umfassen.

Die oben genannte Aufgabe hinsichtlich eines Computerprogrammproduktes für eine Funkstation in einem Adhoc-Modus eines Funkkommunikationssystems wird durch ein Computerprogrammprodukt mit den Merkmalen des Anspruchs 17 gelöst.

Das erfindungsgemäße Computerprogrammprodukt dient zum Auswählen eines oder mehrerer für die Versendung einer Ankündigung einer durch die Funkstation an eine andere Funkstation beabsichtigten Datenübertragung an die andere Funkstation zu verwendender Subbänder aus einem oder mehreren ersten der Funkstation zur Kommunikation zugewiesenen Subbändern und/oder aus einem oder mehreren zweiten der anderen Funkstation zur Kommunikation zugewiesenen Subbändern eines in eine Mehrzahl von Subbändern aufgeteilten Frequenzbandes.

Die oben genannte Aufgabe hinsichtlich des Computerprogrammproduktes für eine Funkstation in einem Adhoc-Modus eines Funkkommunikationssystems wird weiterhin durch ein Computerprogrammprodukt mit den Merkmalen des Anspruchs 18 gelöst.

Das erfindungsgemäße Computerprogramm dient zum Auswählen eines oder mehrerer für die Versendung einer Bestätigung einer durch eine andere Funkstation an die Funkstation beabsichtigten Datenübertragung an die andere Funkstation zu verwendender Subbänder aus einem oder mehreren ersten der Funkstation zur Kommunikation zugewiesenen Subbändern und/oder aus einem oder mehreren zweiten der anderen Funkstation zur Kommunikation zugewiesenen Subbändern eines in eine Mehrzahl von Subbändern aufgeteilten Frequenzbandes.

Die erfindungsgemäßen Computerprogrammprodukte eignen sich insbesondere zur Durchführung des erfindungsgemäßen Verfahrens und können hierfür geeignete weitere Funktionalitäten aufweisen. Insbesondere kann ein Computerprogrammprodukt sowohl die Funktionalität des zuerst beschriebenen erfindungsgemäßen Computerprogrammproduktes nach Anspruch 17 als auch die Funktionalität des als zweites beschriebenen erfindungsgemäßen Computerprogrammproduktes nach Anspruch 18 aufweisen.

Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Im folgenden wird die Erfindung anhand eines Ausführungsbeispiels näher erläutert. Dabei zeigen
- Figur 1:: ein Funkkommunikationssystem,
- Figur 2:: den Stand der Technik bezüglich eines Zugriffs auf Funkressourcen gemäß IEEE 802.11,
- Figur 3a:: schematisch eine erste Realisierung der erfindungsgemäßen Versendung von Signalisierung auf Subbändern,
- Figur 3b:: schematisch eine zweite Realisierung der erfindungsgemäßen Versendung von Signalisierung auf Subbändern,
- Figur 3c:: schematisch eine dritte Realisierung der erfindungsgemäßen Versendung von Signalisierung auf Subbändern,
- Figur 3d:: schematisch eine vierte Realisierung der erfindungsgemäßen Versendung von Signalisierung auf Subbändern,
- Figur 4:: eine erste erfindungsgemäße Funkstation,
- Figur 5:: eine zweite erfindungsgemäße Funkstation.

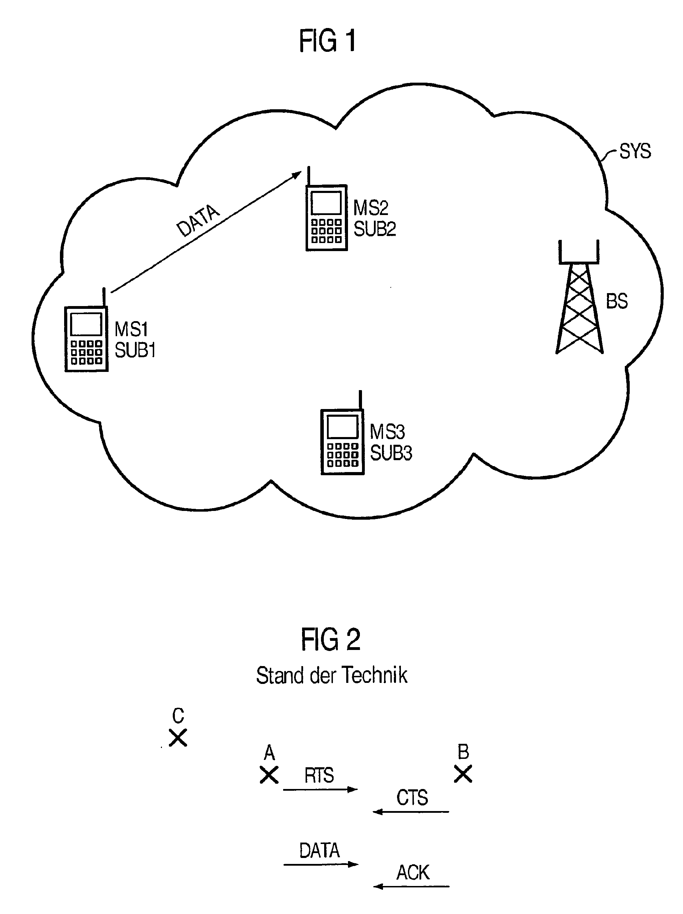

Figur 1 zeigt ein Funkkommunikationssystem SYS, welches drei Mobilstationen MS1, MS2 und MS3, sowie eine Basisstation BS umfasst. Das Funkkommunikationssystem kann weitere Mobilstationen aufweisen, die der Übersichtlichkeit halber in Figur 1 nicht dargestellt sind. Auch eine Anbindung der Basisstation an ein Kernnetz ist in Figur 1 nicht dargestellt. Innerhalb des betrachteten Funkkommunikationssystems SYS existiert ein Adhoc-Modus, in welchem die Mobilstationen MS1, MS2 und MS3 direkt miteinander kommunizieren können, ohne dass es einer Weiterleitung von Daten durch die Basisstation BS bedarf.

Zur Kommunikation im Adhoc-Modus setzen die Mobilstationen MS1, MS2 und MS3 ein OFDM-Übertragungsverfahren ein. Hierbei wird ein Frequenzband in eine Vielzahl von Subbändern untergliedert, wobei Subbänder den Mobilstationen MS1, MS2 und MS3 zur Kommunikation zugewiesen werden. Diese Zuweisung von Subbändern zu den Mobilstationen MS1, MS2 und MS3 erfolgt durch die Basisstation BS. Hierfür ist die Basisstation BS mit einer Einrichtung zur Verwaltung von Funkressourcen verbunden. Bei der Zuweisung der Subbänder können einer Mobilstation eines oder mehrere Subbänder zugewiesen werden. Weiterhin ist es möglich, dass ein Subband mehreren Mobilstationen zugewiesen wird. Die Zuweisung der Subbänder zu den Mobilstationen erfolgt dynamisch, so kann z.B. abhängig vom Bedarf der einzelnen Mobilstationen mit der Zeit eine Änderung der einer Mobilstation zugewiesenen Subbänder erfolgen. In Figur 1 ist der Mobilstation MS1 aktuell das Subband SUB1, der Mobilstation MS2 das Subband MS2 und der Mobilstation MS3 das Subband SUB3 zugewiesen. Während sich die Subbänder SUB1, SUB2 und SUB3 voneinander unterscheiden, ist es möglich, dass sich z.B. in der Nähe der Mobilstation MS1 eine andere Mobilstationen befinden, welcher das gleiche Subband SUB1 zugewiesen wurde.

Die Basisstation BS teilt den Mobilstationen MS1, MS2 und MS3 auch die ihren benachbarten Mobilstationen zugewiesenen Subbänder mit. Unter benachbarten Mobilstationen werden Mobilstationen verstanden, welche sich innerhalb des jeweiligen Funkabdeckungsbereiches der anderen Mobilstation befinden, so dass sie über einen einzigen Hop ohne Weiterleitung der Daten durch andere Mobilstationen kommunizieren können. So ist der Mobilstation MS1 beispielsweise bekannt, dass der Mobilstation MS2 das Subband SUB2 und der Mobilstation MS3 das Subband SUB3 zugewiesen ist. Sollen Daten von einer Sender-Mobilstation zu einer entfernten, nicht benachbarten Empfänger-Mobilstation versendet werden, sendet die Sender-Mobilstation die Daten an eine benachbarte Mobilstation, welche die Daten wiederum an eine ihr benachbarte Mobilstation weiterleite, usw., bis die Daten die Empfänger-Mobilstation erreichen. Hierzu nutzen die Mobilstationen die Kenntnisse der ihren benachbarten Mobilstationen zugewiesenen Subbänder aus.

Während die Funkressource der Frequenz bzw. der Subbänder somit zentral durch die Basisstation BS unter die Mobilstationen MS1, MS2 und MS3 des Funkkommunikationssystems SYS aufgeteilt wird, existiert eine derartige zentrale Aufteilung der Funkressource der Zeit in dem Adhoc-Modus nicht. Vielmehr wird hierbei der Zugang zur Funkressource der Zeit durch die Mobilstationen MS1, MS2 und MS3 selbstorganisierend verwaltet.

In selbstorganisierenden Netzen nach dem Standard IEEE 802.11, welche auf dem TDD (time division duplex) Prinzip basieren, findet die Belegung der Funkressource der Zeit für die Datenübertragung zwischen zwei Mobilstationen bzw. die Signalisierung betreffend diese Datenübertragung wie auch im Funkkommunikationssystem SYS der Figur 1 ohne Unterstützung einer zentralen Instanz statt. Das hierfür verwendete MAC-Protokoll (MAC: Medium Access Control) basiert auf dem vielfachzugriffsverfahren CSMA/CA (Carrier Sense Multiple Access with Collision Avoidance), welches im folgenden kurz anhand der Figur 2 erläutert wird.

Soll zwischen einer Mobilstation A (Sender-Mobilstation) und einer Mobilstation B (Empfänger-Mobilstation) eine Datenübertragung zustande kommen, so wird von der Mobilstation A zunächst die Übertragungsfrequenz abgehört. Ist das Übertragungsmedium für eine spezifizierte Dauer (Distributed Inter Frame Space, DIFS) frei, d.h. wird die Frequenz aktuell nicht für eine andere Übertragung genutzt, so sendet die Mobilstation A einen Request to Send Kontrollrahmen RTS aus, welcher Informationen über die zu übertragende Datenmenge enthält. Antwortet die Mobilstation B mit einem Clear to Send Kontrollrahmen CTS, so überträgt die Mobilstation A im folgenden die Daten DATA. Nach dem fehlerfreien Empfang der Daten DATA sendet die Mobilstation B eine Bestätigung ACK des korrekten Empfangs. Empfängt die Mobilstation A hingegen den Kontrollrahmen CTS nicht innerhalb einer bestimmten Zeitspanne, so versucht sie nach einer zufälligen Wartezeit erneut, eine Übertragung zu realisieren, indem der Kontrollrahmen RTS erneut ausgestrahlt wird.

Um Kollisionen bei Übertragungen zu vermeiden, darf jede andere Mobilstation, wie z.B. die Mobilstation C, die sowohl den Kontrollrahmen RTS der Mobilstation A als auch den Kontrollrahmen CTS der Mobilstation B empfängt, das Übertragungsmedium solange nicht verwenden, bis sie die Bestätigung ACK von der Mobilstation B empfangen hat. Empfängt die Mobilstation C nur den Kontrollrahmen RTS von der Mobilstation A, so darf sie das Übertragungsmedium für denjenigen Zeitraum nicht beanspruchen, der benötigt wird, um die im Kontrollrahmen RTS angegebene Datenmenge von der Mobilstation A zu der Mobilstation B zu übertragen. Empfängt die Mobilstation C nur den Kontrollrahmen CTS von der Mobilstation B, so muss sie warten, bis sie auch die von der Mobilstation B ausgesendete Bestätigung ACK empfängt. Auf diese Weise wird verhindert, dass Mobilstationen, die in der Reichweite der Mobilstation A und/oder der Mobilstation B liegen und die Übertragung zwischen den Mobilstationen A und B durch Nutzung der gleichen Ressource stören könnten, einen Zugriff auf die Funkressource vornehmen.

Während bei dem herkömmlichen IEEE 802.11 Funkkommunikationssystem den Mobilstationen eine Frequenz zur Datenübertragung, sowie zur Übersendung der Kontrollrahmen RTS, CTS und der Bestätigung ACK zur Verfügung steht, sind jeder Mobilstation im Funkkommunikationssystem SYS nach Figur 1 Subbänder zur Kommunikation zugewiesen, welche sich in der Regel voneinander unterscheiden. Daher kann das für ein TDD-System beschriebene Verfahren der Figur 2 nicht auf das OFDM-System übertragen werden.

Im folgenden wird der Fall betrachtet, dass die Mobilstation MS1 beabsichtigt, Daten DATA zu der Mobilstation MS2 zu senden. Hierzu ist ihr bekannt, dass der Mobilstation MS2 das Subband SUB2 zugewiesen ist. Umgekehrt ist auch der Mobilstation MS2 bekannt, dass der Mobilstation MS1 das Subband SUB1 zugewiesen ist. Die Mobilstationen MS1 und MS2 können somit auf dem Subband SUB1 oder auf dem Subband SUB2 oder auf beiden Subbändern SUB1 und SUB2 kommunizieren.

Bei der Entscheidung darüber, auf welchen Subbändern die bevorstehende Datenübertragung von der Mobilstation MS1 zu der Mobilstation MS2 signalisiert wird, muss bedacht werden, dass Subbänder, welche aktuell von anderen Mobilstationen verwendet werden, nicht für die Datenübertragung eingesetzt werden sollten, um die aktuell stattfindende Kommunikation auf dem jeweiligen Subband nicht zu stören. Weiterhin sollte sichergestellt werden, dass dasjenige Subband, auf welchem die Daten von der Mobilstation MS1 zu der Mobilstation MS2 übertragen werden, nicht zur gleichen Zeit von der Mobilstation MS2 benachbarten Mobilstationen verwendet werden, um eine Störung der Datenübertragung zwischen den Mobilstationen MS1 und MS2 zu vermeiden.

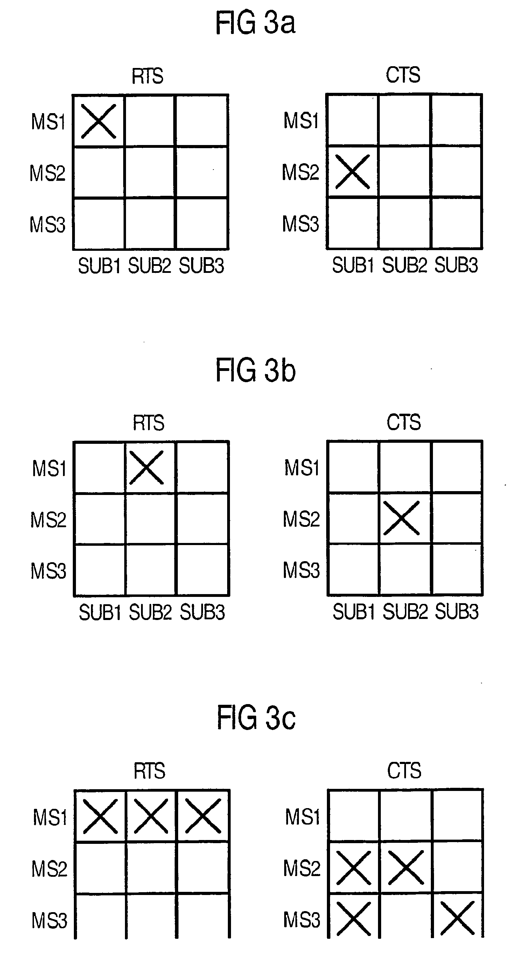

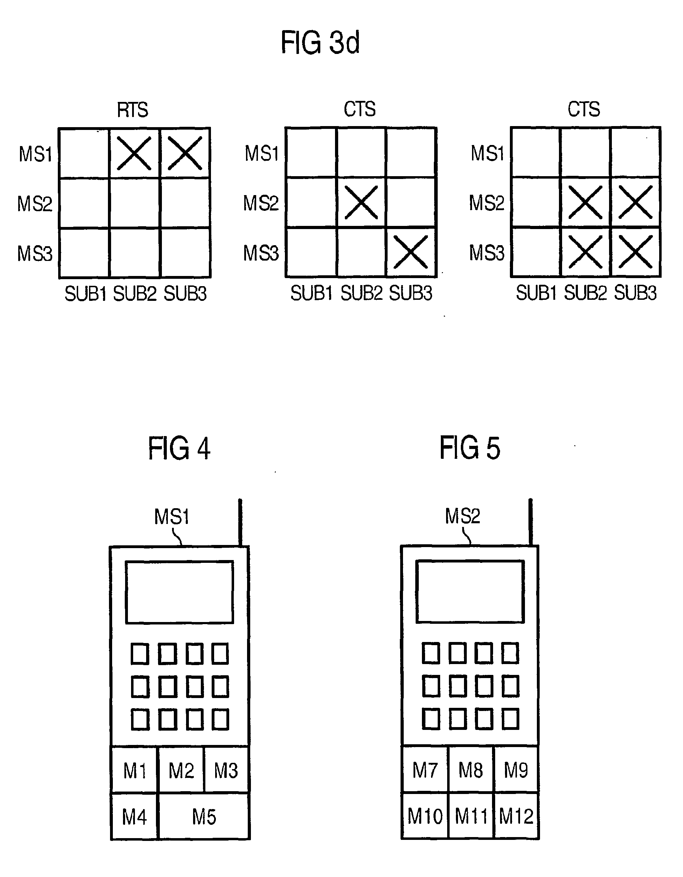

Die Mobilstation MS1 überwacht ihr Subband SUB1 und die Subbänder SUB2 und SUB3 ihrer benachbarten Mobilstationen MS2 und MS3. Dadurch kann sie detektieren, ob diese Subbänder aktuell von anderen Mobilstationen innerhalb ihres Funkabdeckungsbereiches zur Kommunikation verwendet werden. In Figur 3a ist der Fall dargestellt, dass die Mobilstation MS1 festgestellt hat, dass das Subband SUB1 unbelegt ist. Die Versendung von Kontrollsignalen RTS bzw. CTS durch die Mobilstationen MS1, MS2 und MS3 auf den jeweiligen Subbändern SUB1, SUB2 und SUB3 ist in den Figuren 3a, 3b, 3c und 3d durch Kreuze in den Gittern gekennzeichnet, wobei innerhalb der Gitter nach rechts die Subbänder SUB1, SUB2 und SUB3 und noch oben die Mobilstationen MS1, MS2 und MS3 aufgetragen sind.

Die Mobilstation MS1 sendet im linken Teil der Figur 3a ein Kontrollsignal RTS auf dem Subband SUB1 an die Mobilstation MS2, durch welches die bevorstehende Datenübertragung angekündigt wird. Dem Kontrollsignal RTS kann entnommen werden, welcher Umfang an Daten an welchen Adressaten gesendet werden soll. Das Kontrollsignal RTS enthält somit die Dauer der bevorstehenden Datenübertragung, sowie Identifikationsinformation des Senders und des Empfängers.

Auch die Mobilstation MS2 überwacht ihr Subband SUB2 und die Subbänder ihrer benachbarten Mobilstationen. Nachdem sie das Kontrollsignal RTS empfangen hat, stellt sie fest, dass auch innerhalb ihres Funkabdeckungsbereiches das Subband SUB1 unbelegt ist. Sie sendet im rechten Teil der Figur 3a ein Kontrollsignal CTS auf dem Subband SUB1 zurück an die Mobilstation MS1, welchem zu entnehmen ist, dass sie zum Empfang der Daten bereit ist. Das Kontrollsignal CTS enthält wie auch das Kontrollsignal RTS Informationen über die Dauer der bevorstehenden Datenübertragung.

Durch die Versendung von Kontrollsignalen RTS und CTS auf dem Subband SUB1 ist es den Mobilstationen innerhalb der Funkabdeckungsbereiche der Mobilstationen MS1 und MS2 während der den Kontrollsignalen RTS und CTS entnehmbaren Zeitspanne verboten, Informationen auf dem Subband SUB1 zu senden.

Nach dem Empfang des Kontrollsignals CTS durch die Mobilstation MS1 versendet diese die Daten DATA an die Mobilstation MS2 auf dem reservierten Subband SUB1, die Empfangsbestätigung der Mobilstation MS2 wird daraufhin auch auf dem Subband SUB1 gesendet.

Sind der Mobilstation MS1 eine Mehrzahl von Subbändern zugewiesen, so kann die beschriebene Versendung der Kontrollsignale RTS und CTS auf allen oder auf einer Teilmenge der Subbänder stattfinden. Die Mobilstation MS1 überprüft hierzu, welche der ihr zugewiesenen Subbänder aktuell unbelegt sind. Eine Versendung des Kontrollsignals RTS sollte auf denjenigen der unbelegten Subbänder erfolgen, welche später zur Versendung der Daten verwendet werden sollen. Nach dem Empfang des Kontrollsignals RTS überprüft die Mobilstation MS2, welche der für das Kontrollsignal RTS eingesetzten Subbänder unbelegt sind. Vorteilhafterweise erfolgt die Versendung des Kontrollsignals CTS auf allen freien Subbändern, auf welchen das Kontrollsignal RTS gesendet wurde. Ist ein Teil dieser Subbänder belegt, so wird der unbelegte Teil der Subbänder, auf welchen das Kontrollsignal RTS gesendet wurde, zur Übertragung des Kontrollsignals RTS verwendet. Im Anschluss überträgt die Mobilstation MS1 die Daten auf denjenigen Subbändern, auf welchen das Kontrollsignal CTS gesendet wurde. Es ist jedoch auch möglich, dass nur eine Teilmenge dieser Subbänder zur Versendung der Daten verwendet wird. Auch für die anschließende Versendung der Empfangsbestätigung können alle Subbänder des Kontrollsignals CTS oder eine Teilmenge dieser Subbänder verwendet werden.

In Figur 3b wird der Fall betrachtet, dass die Mobilstation MS1 festgestellt hat, dass das Subband SUB1 aktuell belegt, jedoch das Subband SUB2 aktuell unbelegt ist. Die Mobilstation MS1 sendet daher das Kontrollsignal RTS im linken Teil der Figur 3b auf dem Subband SUB2, woraufhin die Mobilstation MS2 im rechten Teil der Figur 3b mit einem Kontrollsignal CTS auf dem Subband SUB2 antwortet. Die Datenübertragung sowie die Bestätigung des korrekten Empfangs der Daten erfolgt ebenfalls auf dem Subband SUB2. Falls der Mobilstation MS2 eine Mehrzahl von Subbändern zugewiesen sind, so gelten obige Ausführungen bezüglich der Mehrzahl der der Mobilstation MS1 zugewiesenen Subbänder analog.

Im allgemeinen kann also die Versendung eines Kontrollsignals RTS durch die Mobilstation MS1 sowohl auf einem oder mehreren ihr zugewiesenen Subbändern als auch auf einem oder mehreren der Mobilstation MS2 zugewiesenen Subbändern als auch auf einer beliebigen Kombination dieser Subbänder erfolgen. Hierbei berücksichtigt die Mobilstation MS1 jedoch, welche Subbänder dieser Gesamtmenge an Subbändern, welche ihr und der Mobilstation MS2 zur Kommunikation zugewiesen wurden, aktuell unbelegt sind. Vorzugsweise sollte die Mobilstation MS1 jedoch zur Versendung des Kontrollsignals RTS und zur nachfolgenden Versendung der Daten ihr zugewiesene Subbänder verwenden. Dies erleichtert es der Einrichtung, welche für die Zuweisung von Subbändern zuständig ist, die Auslastung der jeweiligen Subbänder durch die Mobilstationen, welchen diese Subbänder zugewiesen wurden, abzuschätzen.

Für die Versendung des Kontrollsignals CTS stehen wie auch für das Kontrollsignal RTS sowohl eines oder mehrere der der Mobilstation MS1 zugewiesenen Subbänder als auch eines oder mehrere der der Mobilstation MS2 zugewiesenen Subbänder als auch eine beliebige Kombination dieser Subbänder zur Verfügung. Hierbei sollte die Mobilstation MS2 jedoch kein Subband verwenden, welches von der Mobilstation MS1 nicht für das Kontrollsignal RTS verwendet wurde. Weiterhin findet durch die Mobilstation MS2 eine Überprüfung der von der Mobilstation MS1 für das Kontrollsignal RTS verwendeten Subbänder auf deren aktuelle Belegung in dem Funkabdeckungsbereich der Mobilstation MS2 hin statt. So ergeben sich die Subbänder für das Kontrollsignal CTS als diejenigen Subbänder des Kontrollsignals RTS, welche aktuell nicht belegt sind.

Auch für die Übertragung der Daten von der Mobilstation MS1 zu der Mobilstation MS2 können wie auch für die Kontrollsignale RTS und CTS sowohl eines oder mehrere der der Mobilstation MS1 zugewiesenen Subbänder als auch eines oder mehrere der der Mobilstation MS2 zugewiesenen Subbänder als auch eine beliebige Kombination dieser Subbänder verwendet werden. Um zu gewährleisten, dass die Datenübertragung nicht durch andere Übertragungen auf den gleichen Subbändern gestört wird, werden die Daten jedoch zweckmäßigerweise maximal auf denjenigen Subbändern übertragen, auf welchen sowohl das Kontrollsignal RTS als auch das Kontrollsignal CTS gesendet wurde. Die Verwendung einer Teilmenge der Subbänder, auf welchen sowohl das Kontrollsignal RTS als auch das Kontrollsignal CTS gesendet wurde, ist möglich. Eine Verwendung von Subbändern, auf welchen weder das Kontrollsignal CTS noch das Kontrollsignal RTS gesendet wurde, bleibt somit aus.

Die entsprechende Ausführung über die Versendung der Daten gilt auch für die Wahl der Subbänder zur Versendung der Bestätigung des korrekten Datenempfangs durch die Mobilstation MS2.

In den Figuren 3c und 3d wird der Fall betrachtet, dass die Daten, welche die Mobilstation MS1 zu versenden beabsichtigt, sowohl an die Mobilstation MS2 als auch an die Mobilstation MS3 adressiert sind.

In Figur 3c hat die Mobilstation MS1 festgestellt, dass die drei Subbänder SUB1, SUB2 und SUB3 aktuell nicht belegt sind. Eine Versendung des Kontrollsignals RTS erfolgt dann im linken Teil der Figur 3c auf den Subbändern SUB1, SUB2 und SUB3. Die Mobilstationen MS2 und MS3 haben ebenfalls festgestellt, dass in ihrem Funkabdeckungsbereich die Subbänder SUB1, SUB2 und SUB3 nicht belegt sind. Daraufhin sendet im rechten Teil der Figur 3c die Mobilstation MS2 das Kontrollsignal CTS auf den Subbändern SUB1 und SUB2, während die Mobilstation MS3 das Kontrollsignal CTS auf den Subbändern SUB1 und SUB3 sendet. Die Tatsache, dass das Kontrollsignal CTS nicht nur auf dem Subband SUB1, sondern auch auf den Subbändern SUB2 und SUB3 übertragen wird, hat den Vorteil, dass die Mobilstation MS1 so die beiden Kontrollsignale CTS, welche auf den voneinander unterschiedlichen Subbändern SUB2 und SUB3 gesendet werden, voneinander unterscheiden kann.

Die Versendung der Daten im Anschluss kann auf allen drei Subbändern SUB1, SUB2 und SUB3 stattfinden. Vorteilhafterweise werden die Daten jedoch nur auf dem Subband SUB1 versendet. Fände eine Versendung z.B. auf dem Subband SUB2 statt, so könnte die Mobilstation MS3 durch Störsignale auf dem Subband SUB2 innerhalb ihres Funkabdeckungsbereiches am fehlerfreien Empfang der Daten gehindert werden, da innerhalb dieses Funkabdeckungsbereiches das Subband SUB2 nicht durch ein Kontrollsignal CTS reserviert wurde. Zur Umgehung dieses Problems kann die Versendung der Daten für die Mobilstation MS3 zusätzlich oder alternativ zur Versendung auf dem Subband SUB1 auf dem Subband SUB3 erfolgen. Für die Mobilstation MS2 werden die Daten dann zusätzlich oder alternativ zur Versendung auf dem Subband SUB1 auf dem Subband SUB2 versendet. Somit kann auf dem Subband SUB1 eine gemeinsame Datenversendung an die beiden Mobilstationen MS2 und MS3 erfolgen, während auf den Subbändern SUB2 und SUB3 die Daten separat zu den Mobilstationen MS2 und MS3 gesendet werden.

Die Bestätigungen der Mobilstationen MS2 und MS3 erfolgen nach dem Empfang der Daten für die Mobilstation MS2 auf dem Subband SUB2 und für die Mobilstation MS3 auf dem Subband SUB3, so dass die Bestätigungen für die Mobilstation MS1 voneinander unterscheidbar sind.

Figur 3d zeigt den Fall, dass die Mobilstation MS1 festgestellt hat, dass das ihr zugewiesene Subband SUB1 aktuell belegt ist. In diesem Fall sendet sie das Kontrollsignal RTS im linken Teil der Figur 3d an die beiden Mobilstationen MS2 und MS3 auf den Subbändern SUB2 und SUB3. Nachdem die Mobilstationen MS2 und MS3 sichergestellt haben, dass auch in ihrer Nachbarschaft das jeweilige Subband SUB2 und SUB3 zur Verfügung steht, sendet die Mobilstation MS2 das Kontrollsignal CTS auf dem Subband SUB2 und die Mobilstation MS3 auf dem Subband SUB3, wie im mittleren Teil der Figur 3d dargestellt.

Die Datenübertragung kann dann auf einem der beiden Subbänder SUB2 und SUB3 oder auch auf beiden Subbändern SUB2 und SUB3 erfolgen. Hierbei besteht jedoch das oben bereits beschriebene Problem, dass es für die Mobilstationen MS2 und MS3 zu Störungen des fehlerfreien Empfangs kommen kann, wenn das der jeweils anderen Mobilstation zugewiesene Band in der eigenen Nachbarschaft verwendet wird. Somit bietet es sich wie oben beschrieben an, der Mobilstation MS2 die Daten auf dem Subband SUB2 und der Mobilstation MS3 die Daten auf dem Subband SUB3 zu übertragen.

Im Rahmen einer anderen Möglichkeit, dieses Problem zu umgehen, kann die Mobilstation MS1 die Mobilstationen MS2 und MS3 in dem Kontrollsignal RTS auffordern, ein Kontrollsignal CTS auch auf dem der jeweils anderen Mobilstation MS2 oder MS3 zugewiesenen Subband zu senden. In diesem Fall senden beide Mobilstationen MS2 und MS3, wie im rechten Teil der Figur 3d dargestellt, ein Kontrollsignal CTS auf den Subbändern SUB2 und SUB3. Die Lösung des rechten Teils der Figur 3d weist allerdings den Nachteil auf, dass die Mobilstation MS1 die Kontrollsignals CTS der beiden Mobilstationen MS2 und MS3 nicht unterscheiden kann, da sie auf identischen Subbändern gesendet werden.

Die Versendung einer Bestätigung des Datenempfangs durch die Mobilstationen MS2 und MS3 kann sowohl für den mittleren als auch für den rechten Teil der Figur 3d für die Mobilstation MS2 auf dem Subband SUB2 und für die Mobilstation MS3 auf dem Subband SUB3 erfolgen.

Beabsichtigt eine Mobilstation, Daten an mehrere Empfänger zu versenden, so sollte sie ein Kontrollsignal RTS zumindest auf den den mehreren Empfängern zugewiesenen Subbändern senden. Somit sind diese Subbänder innerhalb der Nachbarschaft der Mobilstation reserviert, so dass die Kontrollsignale CTS und die Empfangsbestätigungen der Empfänger auf diesen Subbändern störungsfrei übertragen und von der Mobilstation getrennt werden können. Steht zusätzlich das der Mobilstation zugewiesene Subband zur Verfügung, so sollte das Kontrollsignal RTS auch auf diesem Subband gesendet werden. Dieses Subband kann dann später für die Datenübertragung verwendet werden.

Die obigen Ausführungen lassen sich auch auf den Fall anwenden, dass den Mobilstationen mehrere Subbänder zugewiesen sind. Hierzu kann an Stelle des bisher betrachteten einen Subbandes pro Mobilstation zur Versendung der Kontrollsignale RTS und CTS, sowie der Daten jeweils eines oder mehrere der einer Mobilstation zugewiesenen Subbänder verwendet werden. Vorzugsweise sollten die Daten auf denjenigen Subbändern übertragen werden, auf welchen sowohl ein Kontrollsignal RTS als auch ein Kontrollsignal CTS von allen Empfängern gesendet wurde. Weiterhin sollten die Kontrollsignale CTS von den Empfängern zur Unterscheidbarkeit auf unterschiedlichen Subbändern gesendet werden. Die für die Kontrollsignale RTS und CTS verwendeten Subbänder können dementsprechend gewählt werden. Bezüglich des Kontrollsignals CTS ist es möglich, dass die das Kontrollsignal RTS sendende Mobilstation Anweisungen gibt, auf welchen Subbändern ein Kontrollsignal CTS zu senden ist, falls diese Subbänder in dem Funkabdeckungsbereich der das Kontrollsignal CTS sendenden Mobilstation verfügbar sind.

Figur 4 zeigt die Mobilstation MS1 mit Mitteln M1 zum Speichern von Informationen über die ihr zugewiesenen Subbänder und M2 zum Speichern von Informationen über die ihren Nachbarmobilstationen zugewiesenen Subbänder. Aufgrund der Mittel M3 kann sie ein Kontrollsignal RTS an eine Empfängermobilstation zur Ankündigung einer bevorstehenden Datenübertragung versenden, wobei diese Versendung auf einem oder mehreren der ihr zugewiesenen Subbänder und/oder auf einem oder mehreren der der Empfängermobilstation zugewiesenen Subbänder erfolgt. Die Mittel M4 dienen zum Überwachen ihrer Subbänder und/oder der Subbänder ihrer benachbarten Mobilstationen daraufhin, ob sie in ihrem Funkabdeckungsbereich belegt sind. Durch die Mittel M5 kann die Mobilstation MS1 Subbänder zur Versendung des Kontrollsignals RTS auswählen in Abhängigkeit davon, ob die Subbänder aktuell belegt sind.

In Figur 5 ist die Mobilstation MS2 dargestellt mit Mitteln M7 zum Speichern von Informationen über die ihr zugewiesenen Subbänder und Mitteln M8 zum Speichern von Informationen über die ihren Nachbarmobilstationen zugewiesenen Subbänder. Aufgrund der Mittel M9 kann sie ein Kontrollsignal RTS einer anderen Mobilstation als Ankündigung einer bevorstehenden Datenübertragung empfangen. Die Mittel M10 dienen der Versendung eines Kontrollsignals CTS, wobei diese Versendung auf einem oder mehreren der ihr zugewiesenen Subbänder und/oder auf einem oder mehreren der der anderen Mobilstation zugewiesenen Subbänder erfolgt. Die Mittel M11 dienen zum Überwachen ihrer Subbänder und/oder der Subbänder ihrer benachbarten Mobilstationen daraufhin, ob sie in ihrem Funkabdeckungsbereich belegt sind. Mit den Mitteln M12 kann die Mobilstation MS2 Subbänder zur Versendung des Kontrollsignals CTS auswählen in Abhängigkeit davon, ob die Subbänder aktuell belegt sind und in Abhängigkeit davon, welche Subbänder für das Kontrollsignal RTS verwendet wurden.

## Patentansprüche

1. Verfahren zur Signalisierung betreffend eine beabsichtigte Datenübertragung von einer ersten Funkstation (MS1) zu einer zweiten Funkstation (MS2, MS3) in einem Adhoc-Modus eines Funkkommunikationssystems (SYS),
**dadurch gekennzeichnet,**
- **dass** die Kommunikation von Funkstationen (MS1, MS2, MS3) in dem Adhoc-Modus unter Verwendung eines in eine Mehrzahl von Subbändern (SUB1, SUB2, SUB3) aufgeteilten Frequenzbandes erfolgt, wobei der ersten Funkstation (MS1) eines oder mehrere erste Subbänder (SUB1) und der zweiten Funkstation (MS2, MS3) eines oder mehrere zweite Subbänder (SUB2, SUB3) zur Kommunikation zugewiesen sind, und
- **dass** die erste Funkstation (MS1) an die zweite Funkstation (MS2, MS3) eine Ankündigung (RTS) der beabsichtigten Datenübertragung auf einem oder mehreren Subbändern (SUB1, SUB2, SUB3) entsprechend einer ersten Anzahl von Subbändern sendet,
wobei das Subband oder die Subbänder der ersten Anzahl von Subbändern aus
• einem oder mehreren der ersten Subbänder (SUB1) und/oder
• einem oder mehreren der zweiten Subbänder (SUB2, SUB3)
besteht.

2. Verfahren nach Anspruch 1,
**dadurch gekennzeichnet,**
**dass** die erste Funkstation (MS1) vor der Versendung der Ankündigung (RTS) eine aktuelle Belegung von ersten und/oder von zweiten Subbändern (SUB1, SUB2, SUB3) detektiert und
das Subband oder die Subbänder der ersten Anzahl von Subbändern aus einem oder mehreren aktuell als nicht belegt detektierten Subbändern besteht.

3. Verfahren nach Anspruch 2,
**dadurch gekennzeichnet,**
**dass** das Subband oder die Subbänder der ersten Anzahl von Subbändern in dem Fall, dass die Daten (DATA) an die zweite Funkstation (MS2) als einzigem Adressat gesendet werden sollen, bei einer Detektion von mindestens einem ersten Subband (SUB1) als aktuell nicht belegt aus einer Menge des oder der nicht belegten ersten Subbändern besteht.

4. Verfahren nach Anspruch 2 oder 3,
**dadurch gekennzeichnet,**
**dass** das Subband oder die Subbänder der ersten Anzahl von Subbändern in dem Fall, dass die Daten (DATA) an die zweite Funkstation (MS2) als einzigem Adressat gesendet werden sollen, bei einer Detektion von den ersten Subbändern (SUB1) als aktuell belegt und einer Detektion von mindestens einem zweiten Subband (SUB2, SUB3) als aktuell nicht belegt aus einer Menge des oder der nicht belegten zweiten Subbänder (SUB2, SUB3) besteht.

5. Verfahren nach einem der Ansprüche 2 bis 4,
**dadurch gekennzeichnet,**
**dass** das Subband oder die Subbänder der ersten Anzahl von Subbändern in dem Fall, dass die Daten (DATA) außer an die zweite Funkstation (MS2) an eine dritte Funkstation (MS3), wobei der dritten Funkstation (MS3) eines oder mehrere dritte Subbänder (SUB3) zur Kommunikation zugewiesen sind, als Adressat gesendet werden sollen, bei einer Detektion von mindestens einem ersten Subband (SUB1) und mindestens einem zweiten Subband (SUB2) als aktuell nicht belegt aus einer Menge des oder der nicht belegten ersten und einer Menge des oder der nicht belegten zweiten Subbänder (SUB1, SUB2) besteht.

6. Verfahren nach einem der Ansprüche 2 bis 5,
**dadurch gekennzeichnet,**
**dass** das Subband oder die Subbänder der ersten Anzahl von Subbändern in dem Fall, dass die Daten (DATA) außer an die zweite Funkstation (MS2) an eine dritte Funkstation (MS3), wobei der dritten Funkstation (MS3) eines oder mehrere dritte Subbänder (SUB3) zur Kommunikation zugewiesen sind, als Adressat gesendet werden sollen, bei einer Detektion von den ersten Subbändern (SUB1) als aktuell belegt und einer Detektion von mindestens einem zweiten Subband (SUB2) als aktuell nicht belegt aus einer Menge des oder der nicht belegten zweiten Subbänder (SUB2) besteht.

7. Verfahren zur Signalisierung betreffend eine beabsichtigte Übertragung von Daten (DATA) von einer ersten Funkstationen (MS1) zu einer zweiten Funkstation (MS2, MS3) in einem Adhoc-Modus eines Funkkommunikationssystems (SYS),
**dadurch gekennzeichnet,**
- **dass** die Kommunikation von Funkstationen (MS1, MS2, MS3) in dem Adhoc-Modus unter Verwendung eines in eine Mehrzahl von Subbändern (SUB1, SUB2, SUB3) aufgeteilten Frequenzbandes erfolgt, wobei der ersten Funkstation (MS1) eines oder mehrere erste Subbänder (SUB1) und der zweiten Funkstation (MS2, MS3) eines oder mehrere zweite Subbänder (SUB2, SUB3) zur Kommunikation zugewiesen sind,
- **dass** die zweite Funkstation (MS2, MS3) von der ersten Funkstation (MS1) auf einem oder mehreren Subbändern entsprechend einer ersten Anzahl von Subbändern eine Ankündigung (RTS) der beabsichtigten Datenübertragung von der ersten Funkstation (MS1) an die zweite Funkstation (MS2, MS3) empfängt, und
- **dass** die zweite Funkstation (MS2, MS3) an die erste Funkstation (MS1) auf einem oder mehreren Subbändern entsprechend einer zweiten Anzahl von Subbändern eine Bestätigung (CTS) der beabsichtigten Datenübertragung nach dem Empfang der Ankündigung (RTS) sendet, wobei das Subband oder die Subbänder der zweiten Anzahl von Subbändern aus
• einem oder mehreren der ersten Subbänder (SUB1) und/oder
• einem oder mehreren der zweiten Subbänder (SUB2, SUB3) besteht.

8. Verfahren nach Anspruch 7,
**dadurch gekennzeichnet,**
**dass** die zweite Funkstation (MS2, MS3) vor der Versendung der Bestätigung (CTS) eine aktuelle Belegung von ersten und/oder von zweiten Subbändern (SUB1, SUB2, SUB3) detektiert und
das Subband oder die Subbänder der zweiten Anzahl von Subbändern aus einem oder mehreren aktuell als nicht belegt detektierten Subbändern besteht.

9. Verfahren nach Anspruch 8,
**dadurch gekennzeichnet,**
**dass** das Subband oder die Subbänder der zweiten Anzahl von Subbändern bei einer Detektion durch die zweite Funkstation (MS2, MS3) des Subbandes oder der Subbänder der ersten Anzahl von Subbändern als unbelegt dem Subband oder den Subbändern der ersten Anzahl von Subbändern entsprechen.

10. Verfahren nach Anspruch 8,
**dadurch gekennzeichnet,**
**dass** das Subband oder die Subbänder der zweiten Anzahl von Subbändern einer Teilmenge der Subbänder der ersten Anzahl von Subbändern entsprechen bei einer Detektion durch die zweite Funkstation (MS2, MS3) des Subbandes oder der Subbänder der Teilmenge als unbelegt und dem oder den restlichen Subbändern der ersten Anzahl von Subbändern als belegt.

11. Verfahren nach einem der Ansprüche 7 bis 10,
**dadurch gekennzeichnet,**
**dass** die erste Funkstation (MS1) an die zweite Funkstation (MS2, MS3) auf einem oder mehreren Subbändern entsprechend einer dritten Anzahl von Subbändern die Daten (DATA) nach dem Empfang der Bestätigung (CTS) sendet, wobei das Subband oder die Subbänder der dritten Anzahl von Subbändern aus
• einem oder mehreren der ersten Subbänder (SUB1) und/oder
• einem oder mehreren der zweiten Subbänder (SUB2, SUB3)
besteht.

12. Verfahren nach Anspruch 11,
**dadurch gekennzeichnet,**
**dass** das Subband oder die Subbänder der dritten Anzahl von Subbändern
- dem Subband oder den Subbändern der ersten Anzahl von Subbändern oder
- einer Teilmenge der Subbänder der ersten Anzahl von Subbändern oder
- dem Subband oder den Subbändern der zweiten Anzahl von Subbändern oder
- einer Teilmenge der Subbänder der zweiten Anzahl von Subbändern
entsprechen.

13. Funkstation (MS1) zur Kommunikation mit einer anderen Funkstation (MS2, MS3) in einem Adhoc-Modus eines Funkkommunikationssystems (SYS) mit
- Mitteln (M1) zum Speichern von Informationen über eines oder mehrere erste der Funkstation (MS1) zur Kommunikation zugewiesene Subbänder (SUB1) eines in eine Mehrzahl von Subbändern (SUB1, SUB2, SUB3) aufgeteilten Frequenzbandes,
- Mitteln (M2) zum Speichern von Informationen über eines oder mehrere zweite der anderen Funkstation (MS2, MS3) zur Kommunikation zugewiesene Subbänder (SUB2, SUB3) des Frequenzbandes,
- Mitteln (M3) zum Versenden einer Ankündigung (RTS) an die andere Funkstation (MS2, MS3) einer beabsichtigten Datenübertragung an die andere Funkstation (MS2, MS3) auf einem oder mehreren Subbändern entsprechend einer ersten Anzahl von Subbändern,
wobei das Subband oder die Subbänder der ersten Anzahl von Subbändern aus
• einem oder mehreren der ersten Subbänder (SUB1) und/oder
• einem oder mehreren der zweiten Subbänder (SUB2, SUB3) besteht.

14. Funkstation (MS1) nach Anspruch 13, mit
- Mitteln (M4) zum Detektieren einer aktuellen Belegung von ersten und/oder von zweiten Subbändern (SUB1, SUB2, SUB3) vor der Versendung der Ankündigung (RTS) und
- Mitteln (M5) zum Auswählen des Subbandes oder der Subbänder der ersten Anzahl von Subbändern in Abhängigkeit von einem Detektionsergebnis der Belegung von ersten und/oder zweiten Subbändern (SUB1, SUB2, SUB3).

15. Funkstation (MS2, MS3) zur Kommunikation mit einer anderen Funkstation (MS1) in einem Adhoc-Modus eines Funkkommunikationssystems (SYS) mit
- Mitteln (M7) zum Speichern von Informationen über eines oder mehrere erste der Funkstation (MS2, MS3) zur Kommunikation zugewiesene Subbänder (SUB2, SUB3) eines in eine Mehrzahl von Subbändern (SUB1, SUB2, SUB3) aufgeteilten Frequenzbandes,
- Mitteln (M8) zum Speichern von Informationen über eines oder mehrere zweite der anderen Funkstation (MS1) zur Kommunikation zugewiesene Subbänder (SUB1) des Frequenzbandes,
- Mitteln (M9) zum Empfangen und Auswerten einer Ankündigung (RTS) von der anderen Funkstation (MS1) einer beabsichtigten Datenübertragung von der anderen Funkstation (MS1) an die Funkstation (MS2, MS3) auf einem oder mehreren Subbändern entsprechend einer ersten Anzahl von Subbändern,
- Mitteln (M10) zum Versenden einer Bestätigung (CTS) an die andere Funkstation (MS1) der beabsichtigten Datenübertragung auf einem oder mehreren Subbändern entsprechend einer zweiten Anzahl von Subbändern nach dem Empfang der Ankündigung (RTS), wobei das Subband oder die Subbänder der zweiten Anzahl von Subbändern aus
• einem oder mehreren der ersten Subbänder (SUB1) und/oder
• einem oder mehreren der zweiten Subbänder (SUB2, SUB3)
besteht.

16. Funkstation (MS2, MS3) nach Anspruch 15, mit
- Mitteln (M11) zum Detektieren einer aktuellen Belegung von ersten und/oder von zweiten Subbändern (SUB1, SUB2, SUB3) vor der Versendung der Bestätigung (CTS) und
- Mitteln (M12) zum Auswählen des Subbandes oder der Subbänder der zweiten Anzahl von Subbändern in Abhängigkeit von einem Detektionsergebnis der Belegung von ersten und/oder zweiten Subbändern (SUB1, SUB2, SUB3) und in Abhängigkeit von dem Subband oder den Subbändern der ersten Anzahl von Subbändern.

17. Computerprogrammprodukt für eine Funkstation (MS1) in einem Adhoc-Modus eines Funkkommunikationssystems (SYS) mit Mitteln, die eingerichtet sind zum Auswählen eines oder mehrerer für die Versendung einer Ankündigung (RTS) einer durch die Funkstation (MS1) an ei-ne andere Funkstation (MS2, MS3) beabsichtigten Datenübertragung an die andere Funkstation (MS2, MS3) zu verwendender Subbänder (SUB1, SUB2, SUB3) aus einem oder mehreren ersten der Funkstation (MS1) zur Kommunikation zugewiesenen Subbändern (SUB1) und/oder aus einem oder mehreren zweiten der anderen Funkstation (MS2, MS3) zur Kommunikation zugewiesenen Subbändern (SUB2, SUB3) eines in eine Mehrzahl von Subbändern (SUB1, SUB2, SUB3) aufgeteilten Frequenzbandes.

18. Computerprogrammprodukt für eine Funkstation (MS2, MS3) in einem Adhoc-Modus eines Funkkommunikationssystems (SYS) mit Mitteln, die eingerichtet sind
zum Auswählen eines oder mehrerer für die Versendung einer Bestätigung (CTS) einer durch eine andere Funkstation (MS1) an die Funkstation (MS2, MS3) beabsichtigten Datenübertragung an die andere Funkstation (MS1) zu verwendender Subbänder (SUB1, SUB2, SUB3) aus einem oder mehreren ersten der Funkstation (MS2, MS3) zur Kommunikation zugewiesenen Subbändern (SUB2, SUB3) und/oder aus einem oder mehreren zweiten der anderen Funkstation (MS1) zur Kommunikation zugewiesenen Subbändern (SUB1) eines in eine Mehrzahl von Subbändern (SUB1, SUB2, SUB3) aufgeteilten Frequenzbandes.

## Claims

1. Method for signalling relating to an intended data transmission from a first radio station (MS1) to a second radio station (MS2, MS3) in an ad-hoc mode of a radio communication system (SYS),
**characterised in that**
- the communication of radio stations (MS1, MS2, MS3) in the ad-hoc mode takes place using a frequency band which is divided into a plurality of sub-bands (SUB1, SUB2, SUB3), wherein the first radio station (MS1) is assigned one or more first sub-bands (SUB1) and the second radio station (MS2, MS3) is assigned one or more second sub-bands (SUB2, SUB3) for communicating, and that
- the first radio station (MS1) sends a notification (RTS) of the intended data transmission to the second radio station (MS2, MS3) on one or more sub-bands (SUB1, SUB2, SUB3) corresponding to a first number of sub-bands,
wherein the sub-band or the sub-bands of the first number of sub-bands consist of
• one or more of the first sub-bands (SUB1) and/or
• one or more of the second sub-bands (SUB2, SUB3).

2. Method according to claim 1,
**characterised in that**
the first radio station (MS1) detects a current occupancy of first and/or second sub-bands (SUB1, SUB2, SUB3) prior to sending the notification (RTS), and
the sub-band or the sub-bands of the first number of sub-bands consist of one or more sub-bands which are currently detected as not occupied.

3. Method according to claim 2,
**characterised in that**
in the event that the data (DATA) must be sent to the second radio station (MS2) as sole addressee, the sub-band or sub-bands of the first number of sub-bands consist of a set of the unoccupied first sub-band or sub-bands, assuming at least one first sub-band (SUB1) is detected as currently unoccupied.

4. Method according to claim 2 or 3,
**characterised in that**
in the event that the data (DATA) must be sent to the second radio station (MS2) as sole addressee, the sub-band or sub-bands of the first number of sub-bands consist of a set of the unoccupied second sub-band or sub-bands (SUB2, SUB3), assuming the first sub-bands (SUB1) are detected as currently occupied and at least one second sub-band (SUB2, SUB3) is detected as currently unoccupied.

5. Method according to one of the claims 2 to 4,
**characterised in that**
if the data (DATA) must be sent to a third radio station (MS3) as an addressee in addition to the second radio station (MS2), said third radio station (MS3) having been assigned one or more third sub-bands (SUB3) for communicating, the sub-band or sub-bands of the first number of sub-bands can consist of a set of the unoccupied first sub-band or sub-bands and a set of the unoccupied second sub-band or sub-bands (SUB1, SUB2), assuming at least one first sub-band (SUB1) and at least one second sub-band (SUB2) are detected as currently unoccupied.

6. Method according to one of the claims 2 to 5,
**characterised in that**
if the data (DATA) must be sent to a third radio station (MS3) as an addressee in addition to the second radio station (MS2), said third radio station (MS3) having been assigned one or more third sub-bands (SUB3) for communicating, the sub-band or sub-bands of the first number of sub-bands consist of a set of the unoccupied second sub-band or sub-bands (SUB2), assuming the first sub-bands (SUB1) are detected as currently occupied and at least one second sub-band (SUB2) is detected as currently unoccupied.

7. A method for signalling relating to an intended transmission of data (DATA) from a first radio station (MS1) to a second radio station (MS2, MS3) in an ad-hoc mode of a radio communication system (SYS),
**characterised in that**
- the communication of radio stations (MS1, MS2, MS3) in the ad-hoc mode takes place using a frequency band which is divided into a plurality of sub-bands (SUB1, SUB2, SUB3), wherein the first radio station (MS1) is assigned one or more first sub-bands (SUB1) and the second radio station (MS2, MS3) is assigned one or more second sub-bands (SUB2, SUB3) for communicating, that
- the second radio station (MS2, MS3) receives a notification (RTS) from the first radio station (MS1), on one or more sub-bands corresponding to a first number of sub-bands, of the intended data transmission from the first radio station (MS1) to the second radio station (MS2, MS3), and that
- following the receipt of the notification (RTS), the second radio station (MS2, MS3) sends an acknowledgement (CTS) to the first radio station (MS1), on one or more sub-bands corresponding to a second number of sub-bands, of the intended data transmission, wherein the sub-band or sub-bands of the second number of sub-bands consist of
• one or more of the first sub-bands (SUB1) and/or
• one or more of the second sub-bands (SUB2, SUB3) .

8. Method according to claim 7,
**characterised in that**
prior to sending the acknowledgement (CTS), the second radio station (MS2, MS3) detects a current occupancy of first and/or second sub-bands (SUB1, SUB2, SUB3), and the sub-band or sub-bands of the second number of sub-bands consist of one or more sub-bands which have been detected as currently unoccupied.

9. Method according to claim 8,
**characterised in that**
if the second radio station (MS2, MS3) detects that the sub-band or sub-bands of the first number of sub-bands are unoccupied, the sub-band or sub-bands of the second number of sub-bands correspond to the sub-band or sub-bands of the first number of sub-bands.

10. Method according to claim 8,
**characterised in that**
the sub-band or sub-bands of the second number of sub-bands correspond to a subset of the sub-bands of the first number of sub-bands, assuming the second radio station (MS2, MS3) detects that the sub-band or sub-bands of the subset are unoccupied and that the remaining sub-band or sub-bands of the first number of sub-bands are occupied.

11. Method according to one of claims 7 to 10,
**characterised in that**
after receiving the acknowledgement (CTS), the first radio station (MS1) sends the data (DATA) to the second radio station (MS2, MS3) on one or more sub-bands corresponding to a third number of sub-bands, wherein the sub-band or sub-bands of the third number of sub-bands consist of
• one or more of the first sub-bands (SUB1) and/or
• one or more of the second sub-bands (SUB2, SUBS).

12. Method according to claim 11,
**characterised in that**
the sub-band or sub-bands of the third number of sub-bands correspond to
- the sub-band or sub-bands of the first number of sub-bands or
- a subset of the sub-bands of the first number of sub-bands or
- the sub-band or sub-bands of the second number of sub-bands or
- a subset of the sub-bands of the second number of sub-bands.

13. Radio station (MS1) for communicating with another radio station (MS2, MS3) in an ad-hoc mode of a radio communication system (SYS), including
- means (M1) for storing information via one or more first sub-bands (SUB1) which are assigned to the radio station (MS1) for communicating, said sub-bands belonging to a frequency band which is divided into a plurality of sub-bands (SUB1, SUB2, SUB3),
- means (M2) for storing information via one or more second sub-bands (SUB2, SUB3) which are assigned to the other radio station (MS2, MS3) for communicating, said sub-bands belonging to the frequency band,
- means (M3) for sending the other radio station (MS2, MS3) a notification (RTS) of an intended data transmission to the other radio station (MS2, MS3) on one or more sub-bands corresponding to a first number of sub-bands,
wherein the sub-band or sub-bands of the first number of sub-bands consist of
• one or more of the first sub-bands (SUB1) and/or
• one or more of the second sub-bands (SUB2, SUB3).

14. Radio station (MS1) according to claim 13, having
- means (M4) for detecting a current occupancy of first and/or second sub-bands (SUB1, SUB2, SUB3) prior to sending the notification (RTS), and
- means (M5) for selecting the sub-band or sub-bands of the first number of sub-bands depending on a detection result of the occupancy of first and/or second sub-bands (SUB1, SUB2, SUB3).

15. Radio station (MS2, MS3) for communicating with another radio station (MS1) in an ad-hoc mode of a radio communication system (SYS), including
- means (M7) for storing information via one or more first sub-bands (SUB2, SUB3) which are assigned to the radio station (MS2, MS3) for communicating, said sub-bands belonging to a frequency band which is divided into a plurality of sub-bands (SUB1, SUB2, SUB3),
- means (M8) for storing information via one or more second sub-bands (SUB1) which are assigned to the other radio station mobile station MS1 for communicating, said sub-bands belonging to the frequency band,
- means (M9) for receiving and analysing a notification (RTS) from the other radio station (MS1) of an intended data transmission from the other radio station (MS1) to the radio station (MS2, MS3) on one or more sub-bands corresponding to a first number of sub-bands,
- means (M10) for sending an acknowledgement (CTS) to the other radio station (MS1), on one or more sub-bands corresponding to a second number of sub-bands, of the intended data transmission, wherein the sub-band or sub-bands of the second number of sub-bands consist of
• one or more of the first sub-bands (SUB1) and/or
• one or more of the second sub-bands (SUB2, SUB3).

16. Radio station (MS2, MS3) according to claim 15, having
- means (M11) for detecting a current occupancy of first and/or second sub-bands (SUB1, SUB2, SUB3) prior to sending the acknowledgement (CTS), and
- means (M12) for selecting the sub-band or sub-bands of the second number of sub-bands depending on a detection result of the occupancy of first and/or second sub-bands (SUB1, SUB2, SUB3), and depending on the sub-band or sub-bands of the first number of sub-bands.

17. Computer program product for a radio station (MS1) in an ad-hoc mode of a radio communication system (SYS), having means which are set up to select one or more sub-bands (SUB1, SUB2, SUB3) which will be used for sending, to another radio station (MS2, MS3), a notification (RTS) of an intended data transmission from the radio station (MS1) to the other radio station (MS2, MS3), said selection being made from one or more first sub-bands (SUB1) which have been assigned to the radio station (MS1) for communicating and/or from one or more second sub-bands (SUB2, SUB3) which have been assigned to the other radio station (MS2, MS3) for communicating, said sub-bands belonging to a frequency band which is divided into a plurality of sub-bands (SUB1, SUB2, SUB3).

18. Computer program product for a radio station (MS2, MS3) in an ad-hoc mode of a radio communication system (SYS), having means which are set up to select one or more sub-bands (SUB1, SUB2, SUB3) which will be used for sending, to another radio station (MS1), an acknowledgement (CTS) of an intended data transmission from the other radio station (MS1) to the radio station (MS2, MS3), said selection being made from one or more first sub-bands (SUB2, SUB3) which have been assigned to the radio station (MS2, MS3) for communicating and/or from one or more second sub-bands (SUB1) which have been assigned to the other radio station (MS1) for communicating, said sub-bands belonging to a frequency band which is divided into a plurality of sub-bands (SUB1, SUB2, SUB3).

## Revendications

1. Procédé de signalisation concernant une transmission de données envisagée d'une première station radio (MS1) vers une deuxième station radio (MS2, MS3) dans un mode ad hoc d'un système de radiocommunication (SYS), **caractérisé en ce que**
- la communication de stations radio (MS1, MS2, MS3) se fait dans le mode ad hoc moyennant l'utilisation d'une bande de fréquences divisée en une pluralité de sous-bandes (SUB1, SUB2, SUB3), une ou plusieurs premières sous-bandes (SUB1) étant allouées à la première station radio (MS1) et une ou plusieurs deuxièmes sous-bandes (SUB2, SUB3) étant allouées à la deuxième station radio (MS2, MS3) aux fins de la communication et
- la première station radio (MS1) envoie un avertissement (RTS) de la transmission de données envisagée à la deuxième station radio (MS2, MS3) sur une ou plusieurs sous-bandes (SUB1, SUB2, SUB3) conformément à un premier nombre de sous-bandes,
la sous-bande ou les sous-bandes du premier nombre de sous-bandes se composant de
- une ou plusieurs des premières sous-bandes (SUB1) et/ou
- une ou plusieurs des deuxièmes sous-bandes (SUB2, SUB3).

2. Procédé selon la revendication 1, **caractérisé en ce que** la première station radio (MS1), avant l'émission de l'avertissement (RTS), détecte une occupation actuelle de premières et/ou de deuxièmes sous-bandes (SUB1, SUB2, SUB3) et la sous-bande ou les sous-bandes du premier nombre de sous-bandes se compose d'une ou de plusieurs sous-bandes détectées actuellement comme étant non occupées.

3. Procédé selon la revendication 2, **caractérisé en ce que** la sous-bande ou les sous-bandes du premier nombre de sous-bandes, dans le cas où il s'agit d'envoyer les données (DATA) à la deuxième station radio (MS2) en tant que destinataire unique, étant donné une détection d'au moins une première sous-bande (SUB1) comme étant actuellement non occupée, se composent d'un ensemble de la ou des premières sous-bandes non occupées.

4. Procédé selon la revendication 2 ou 3, **caractérisé en ce que** la sous-bande ou les sous-bandes du premier nombre de sous-bandes, dans le cas où il s'agit d'envoyer les données (DATA) à la deuxième station radio (MS2) en tant que destinataire unique, étant donné une détection des premières sous-bandes (SUB1) comme étant actuellement occupées et une détection d'au moins une deuxième sous-bande (SUB2, SUB3) comme étant actuellement non occupée, se composent d'un ensemble de la ou des deuxièmes sous-bandes (SUB2, SUB3) non occupées.

5. Procédé selon l'une des revendications 2 à 4, **caractérisé en ce que** la sous-bande ou les sous-bandes du premier nombre de sous-bandes, dans le cas où il s'agit d'envoyer les données (DATA), outre à la deuxième station radio (MS2), à une troisième station radio (MS3) en tant que destinataire, une ou plusieurs troisièmes sous-bandes (SUB3) étant allouées à la troisième station radio (MS3) aux fins de la communication, étant donné une détection d'au moins une première sous-bande (SUB1) et d'au moins une deuxième sous-bande (SUB2) comme étant actuellement non occupées, se composent d'un ensemble de la ou des premières sous-bandes non occupées et d'un ensemble de la ou des deuxièmes sous-bandes non occupées (SUB1, SUB2).

6. Procédé selon l'une des revendications 2 à 5, **caractérisé en ce que** la sous-bande ou les sous-bandes du premier nombre de sous-bandes, dans le cas où il s'agit d'envoyer les données (DATA), outre à la deuxième station radio (MS2), à une troisième station radio (MS3) en tant que destinataire, une ou plusieurs troisièmes sous-bandes (SUB3) étant allouées à la troisième station radio (MS3) aux fins de la communication, étant donné une détection des premières sous-bandes (SUB1) comme étant actuellement occupées et une détection d'au moins une deuxième sous-bande (SUB2) comme étant actuellement non occupée, se composent d'un ensemble de la ou des premières sous-bandes non occupées et d'un ensemble de la ou des deuxièmes sous-bandes non occupées (SUB2).

7. Procédé de signalisation concernant une transmission de données (DATA) envisagée d'une première station radio (MS1) vers une deuxième station radio (MS2, MS3) dans un mode ad hoc d'un système de radiocommunication (SYS), **caractérisé en ce que**
- la communication de stations radio (MS1, MS2, MS3) a lieu dans le mode ad hoc moyennant l'utilisation d'une bande de fréquences divisée en une pluralité de sous-bandes (SUB1, SUB2, SUB3), une ou plusieurs premières sous-bandes (SUB1) étant allouées à la première station radio (MS1) et une ou plusieurs deuxièmes sous-bandes (SUB2, SUB3) étant allouées à la deuxième station radio (MS2, MS3) aux fins de la communication,
- la deuxième station radio (MS2, MS3) reçoit de la première station radio (MS1), sur une ou plusieurs sous-bandes conformément à un premier nombre de sous-bandes, un avertissement (RTS) de la transmission de données envisagée de la première station radio (MS1) vers la deuxième station radio (MS2, MS3) et
- la deuxième station radio (MS2, MS3) envoie à la première station radio (MS1), sur une ou plusieurs sous-bande conformément à un deuxième nombre de sous-bandes, une confirmation (CTS) de la transmission de données envisagée, après la réception de l'avertissement (RTS), la sous-bande ou les sous-bandes du deuxième nombre de sous-bandes se composant
- d'une ou de plusieurs des premières sous-bandes (SUB1) et/ou
- d'une ou de plusieurs des deuxièmes sous-bandes (SUB2, SUB3).

8. Procédé selon la revendication 7, **caractérisé en ce que** la deuxième station radio (MS2, MS3), avant l'émission de la confirmation (CTS), détecte une occupation actuelle de premières et/ou de deuxièmes sous-bandes (SUB1, SUB2, SUB3) et la sous-bande ou les sous-bandes du deuxième nombre de sous-bandes se composent d'une ou de plusieurs sous-bandes détectées actuellement comme étant non occupées.

9. Procédé selon la revendication 8, **caractérisé en ce que** la sous-bande ou les sous-bandes du deuxième nombre de sous-bandes, étant donné une détection, par la deuxième station radio (MS2, MS3), de la sous-bande ou des sous-bandes du premier nombre de sous-bandes comme étant non occupées, correspondent à la sous-bande ou aux sous-bandes du premier nombre de sous-bandes.

10. Procédé selon la revendication 8, **caractérisé en ce que** la sous-bande ou les sous-bandes du deuxième nombre de sous-bandes correspondent à une partie de l'ensemble des sous-bandes du premier nombre de sous-bandes, étant donné une détection, par la deuxième station radio (MS2, MS3), de la sous-bande ou des sous-bandes de la partie de l'ensemble comme étant non occupées et de la ou des sous-bandes restantes du premier nombre de sous-bandes comme étant occupées.

11. Procédé selon l'une des revendications 7 à 10, **caractérisé en ce que** la première station radio (MS1) envoie à la deuxième station radio (MS2, MS3), sur une ou plusieurs sous-bandes, conformément à un troisième nombre de sous-bandes, les données (DATA) après la réception de la confirmation (CTS), la sous-bande ou les sous-bandes du troisième nombre de sous-bandes se composant
- d'une ou de plusieurs des premières sous-bandes (SUB1) et/ou
- d'une ou de plusieurs des deuxièmes sous-bandes (SUB2, SUB3).

12. Procédé selon la revendication 11, **caractérisé en ce que** la sous-bande ou les sous-bandes du troisième nombre de sous-bandes correspondent
- à la sous-bande ou aux sous-bandes du premier nombre de sous-bandes ou
- à une partie de l'ensemble des sous-bandes du premier nombre de sous-bandes ou
- à la sous-bande ou aux sous-bandes du deuxième nombre de sous-bandes ou
- à une partie de l'ensemble des sous-bandes du deuxième nombre de sous-bandes.

13. Station radio (MS1) pour communiquer avec une autre station radio (MS2, MS3) dans un mode ad hoc d'un système de radiocommunication (SYS), comprenant
- des moyens (M1) pour stocker des informations sur une ou plusieurs premières sous-bandes (SUB1), allouées à la station radio (MS1) aux fins de la communication, d'une bande de fréquences divisée en une pluralité de sous-bandes (SUB1, SUB2, SUB3),
- des moyens (M2) pour stocker des informations sur une ou plusieurs deuxièmes sous-bandes (SUB2, SUB3) de la bande de fréquences, lesquelles sous-bandes sont allouées à l'autre station radio (MS2, MS3) aux fins de la communication,
- des moyens (M3) pour envoyer à l'autre station radio (MS2, MS3), sur une ou plusieurs sous-bandes conformément à un premier nombre de sous-bandes, un avertissement (RTS), à l'autre station radio (MS2, MS3), d'une transmission de données envisagée, la sous-bande ou les sous-bandes du premier nombre de sous-bandes se composant
-- d'une ou de plusieurs des premières sous-bandes (SUB1) et/ou
-- d'une ou de plusieurs des deuxièmes sous-bandes (SUB2, SUB3).

14. Station radio (MS1) selon la revendication 13, comprenant
- des moyens (M4) pour détecter une occupation actuelle de premières et/ou de deuxièmes sous-bandes (SUB1, SUB2, SUB3) avant l'émission de l'avertissement (RTS) et
- des moyens (M5) pour sélectionner la sous-bande ou les sous-bandes du premier nombre de sous-bandes en fonction d'un résultat de la détection de l'occupation de premières et/ou de deuxièmes sous-bandes (SUB1, SUB2, SUB3).

15. Station radio (MS2, MS3) pour communiquer avec une autre station radio (MS1) dans un mode ad hoc d'un système de radiocommunication (SYS), comprenant
- des moyens (M7) pour stocker des informations sur une ou plusieurs premières sous-bandes (SUB2, SUB3), allouées à la station radio (MS2, MS3) aux fins de la communication, d'une bande de fréquences divisée en une pluralité de sous-bandes (SUB1, SUB2, SUB3),
- des moyens (M8) pour stocker des informations sur une ou plusieurs deuxièmes sous-bandes (SUB1) de la bande de fréquences, lesquelles sous-bandes sont allouées à l'autre station radio (MS1) aux fins de la communication,
- des moyens (M9) pour recevoir et évaluer un avertissement (RTS), de l'autre station radio (MS1), d'une transmission de données envisagée de l'autre station radio (MS1) vers la station radio (MS2, MS3) sur une ou plusieurs sous-bandes conformément à un premier nombre de sous-bandes,
- des moyens (M10) pour envoyer une confirmation (CTS), à l'autre station radio (MS1), de la transmission de données envisagée sur une ou plusieurs sous-bandes conformément à un deuxième nombre de sous-bandes, après la réception de l'avertissement (RTS), la sous-bande ou les sous-bandes du deuxième nombre de sous-bandes se composant
-- d'une ou de plusieurs des premières sous-bandes (SUB1) et/ou
-- d'une ou de plusieurs des deuxièmes sous-bandes (SUB2, SUB3).

16. Station radio (MS2, MS3) selon la revendication 15, comprenant
- des moyens (M11) pour détecter une occupation actuelle de premières et/ou de deuxièmes sous-bandes (SUB1, SUB2, SUB3) avant l'émission de la confirmation (CTS) et
- des moyens (M12) pour sélectionner la sous-bande ou les sous-bandes du deuxième nombre de sous-bandes en fonction d'un résultat de la détection de l'occupation de premières et/ou de deuxièmes sous-bandes (SUB1, SUB2, SUB3) et en fonction de la sous-bande ou des sous-bandes du premier nombre de sous-bandes.

17. Produit de programme informatique pour une station radio (MS1) dans un mode ad hoc d'un système de radiocommunication (SYS) avec des moyens qui sont aménagés pour sélectionner une ou plusieurs sous-bandes (SUB1, SUB2, SUB3) à utiliser pour envoyer un avertissement (RTS) d'une transmission de données, envisagée par la station radio (MS1) vers une autre station radio (MS2, MS3), à l'autre station radio (MS2, MS3), à partir d'une ou de plusieurs premières sous-bandes (SUB1) allouées à la station radio (MS1) aux fins de la communication et/ou à partir d'une ou de plusieurs deuxièmes sous-bandes (SUB2, SUB3), allouées à l'autre station radio (MS2, MS3) aux fins de la communication, d'une bande de fréquences divisée en une pluralité de sous-bandes (SUB1, SUB2, SUB3).

18. Produit de programme informatique pour une station radio (MS2, MS3) dans un mode ad hoc d'un système de radiocommunication (SYS) avec des moyens qui sont aménagés pour sélectionner une ou plusieurs sous-bandes (SUB1, SUB2, SUB3) à utiliser pour envoyer une confirmation (CTS) d'une transmission de données, envisagée par une autre station radio (MS1) vers la station radio (MS2, MS3), à l'autre station radio (MS1), à partir d'une ou de plusieurs premières sous-bandes (SUB2, SUB3) allouées à la station radio (MS2, MS3) aux fins de la communication et/ou à partir d'une ou de plusieurs deuxièmes sous-bandes (SUB1), allouées à l'autre station radio (MS1) aux fins de la communication, d'une bande de fréquences divisée en une pluralité de sous-bandes (SUB1, SUB2, SUB3).
